# EUROPEAN PATENT SPECIFICATION

(11) **EP 0 634 237 B1**
(45) Date of publication and mention of the grant of the patent: **17.09.1997**
(21) Application number: 94202521.4
(22) Date of filing: 04.06.1991
(51) Int. Cl.: B21D 28/12, B21D 37/14, B23Q 3/155

(54) **Turret punch press**
Revolverstantpresse
Poinçonneuse à tourelles révolver

(30) Priority: 04.06.1990 JP 144509/90
(43) Date of publication of application: 18.01.1995
(62) Divisional of application: 91910192.3
(73) Proprietor: AMADA COMPANY, LIMITED, Kanagawa 259-11 (JP)
(72) Inventor: Matsuda, Morikatsu, Isehara-shi, Kanagawa 259-11 (JP)
(74) Representative: Hasenrader, Hubert

(56) References cited:
- EP-A- 0 038 199
- EP-A- 0 261 261
- EP-A- 0 310 908
- DE-A- 2 429 330
- DE-A- 4 105 700
- US-A- 4 423 546
- US-E- R E31 042
- PATENT ABSTRACTS OF JAPAN vol. 16, no. 26 (M-1202) 22 January 1992 & JP-A-03 238 122 (AMADA CO LTD) 23 October 1991

## Description

The present invention relates to a turret punch press, and, in particular, to a turret punch press comprising:
a C-shaped main frame having an upper frame arm and a lower frame arm; a workpiece transfer and positioning device for supporting a plate-shaped workpiece in a freely transferable manner in the X-axis and Y-axis directions on the main frame; at least a freely rotatable upper turret supporting a plurality of punches for punching the workpiece and at least a lower turret supporting a plurality of dies to co-operate with the above-mentioned punches; a striker with free vertical motion provided on the main frame for striking the punches, and at least a holder frame having an upper arm and a lower arm, the freely rotatable upper turret and the freely rotatable lower turret being respectively provided on said upper arm and said lower arm.

A turret punch press with such a configuration is known by EP-A-0 310 908 (Figs. 1 and 2).

In such a known turret punch press, the striker and the corresponding punch and die vertically aligned with said striker are located very close to the open end of the C-shaped main frame. As a consequence, the reaction forces generated during the punching operation and transferred by the striker to the upper arm of said C-shaped frame bend and deform the outer end of said upper arm upwardly so that the striker axis becomes inclined with respect to the vertical axis of the corresponding tool pair (punch and die) and the precise location of holes punched into the workpiece is more or less affected and the tools may be deteriorated in the long run by the inclined strokes of the striker.

It is an object of the present invention to provide a turret punch press of the above mentioned type in which the negative influence of the reaction forces of the striker on the main frame and on the precise location of the holes punched into the workpiece is avoided or at least largely attenuated.

This object is achieved according to the present invention by the fact that in a turret punch press according to the preamble of claim 1, the holder frame is mounted on a tie-rod-shaped vertical shaft in the opening formed between the upper frame arm and the lower frame arm of the C-shaped main frame and that, at the end section of said opening, the upper and lower ends of the tie-rod-shaped vertical shaft are secured to the ends of the upper and lower frame arms respectively of said C-shaped main frame.

Thanks to the proposed features, the upper and lower frame arms of the C-shaped main frame are rigidly linked together with each other on both of their ends, the holder frame is located in the opening of the main frame and the striker is mounted on the middle part of the upper arm of said main frame whereby the reaction forces of said striker are transmitted to both ends of the lower arm of said main frame and any notable deviation of said striker from its vertical axis is avoided.

Preferiby, in order to render easily accessible the tools of the upper and lower turrets, the holder frame is rotatably mounted on the tie-rod-shaped vertical shaft with the help of a rotary frame supported on said vertical shaft so as to be freely rotatable.

According to a known configuration (see EP-A-0 310 908, Figs. 3 to 5), the tools of a lower turret and corresponding upper turret are rendered accessible by the holder frame itself rotatably mounted around a vertical axis on a carriage located outside the main frame. This known configuration does not allow to have the holder frame located in the opening of the main frame.

Further, in recent years, in order to increase the variety of processing, technology has been developed for automatically mounting/dismounting and changing the punches and dies on the upper and lower turrets, using an automatic tool changing device, for example, as disclosed in US Patent N° 4624044 and in Japanese Laid open Patent Application N° 63-26225.

However, in this conventional technology, the punching operation on the plate-shaped workpiece must be halted, to the detriment of the operating efficiency, when the punches and dies are changed on the upper and lower turrets of the turret punch press. In fact, even the turrets located outside the C-shaped main frame on the swinging holder frame according to EP 0 310 908 are exposed to shocks and vibrations during the punching operations so that it is difficult to assure a precise mounting of new punches and dies with the help of automatic mounting and dismounting devices.

As in the known punch press the swinging holder frame has its rotation axis and its upper and lower arms located completely outside of the C-shaped main frame, a relatively large space is necessary for the juxtaposed installation of the C-shaped main frame and the holder frame.

Another object of the present invention is to complete the initially specified turret punch press in such a manner that the above drawbacks are also avoided or at least attenuated.

This object is achieved according to a preferred embodiment of the turret punch press of the present invention by the fact that the holder frame is interchangeably mounted on the tie-rod-shaped vertical shaft with the help of a rotary frame supported on said vertical shaft.

Thanks to this configuration, the tools can be mounted on the turrets and the latter can be mounted on a new holder frame far away from the press itself and the fully equipped new holder frame can then be brought to the press and mounted onto the rotary frame of the vertical shaft.

According to another advantageous feature of the invention procuring the interchangeability of the holder frame, the rotary frame freely rotatably supported on the tie-rod-shaped vertical shaft has a side wall of multiform cross section and the holder frame is C-shaped and has its upper arm and lower arm linked together with a column part which is interchangeably mounted on the side wall of said rotary frame.

These and other objects, preferred features, and advantages of the present invention will become more apparent from the following description of preferred embodiments taken in conjunction with the accompanying drawings, in which:
FIG. 1 is a schematic side elevation, for explanatory purposes, which functionally represents an embodiment of a turret punch press of the present invention;
FIG. 2 is a plan view of the same turret punch press;
FIG. 3 is a perspective view illustrating the operation for mounting and dismounting a holder frame, and
FIG. 4 is a sectional view of the mounting and securing section of the turret punch press.

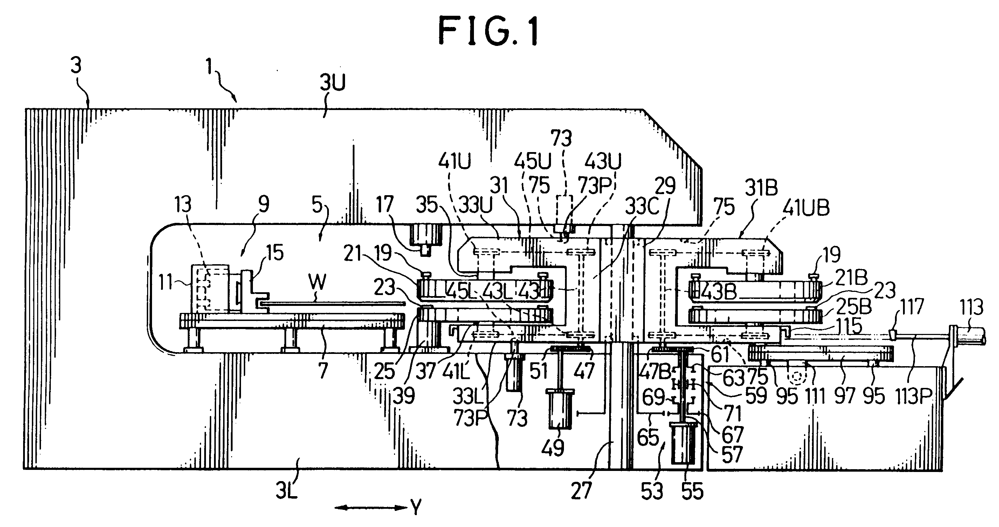

FIG. 1 shows an embodiment of a turret punch press 1 according to the present invention, which has a C-shaped main frame 3 comprising an upper frame arm 3U and a lower frame arm 3L.

An opening 5 is formed between the upper frame arm 3U and the lower frame arm 3L of the main frame 3. A workpiece table 7 for supporting a plate-shaped workpiece W is provided within the opening 5, and a workpiece transfer and positioning device 9 is provided for transferring and positioning the workpiece W in the X-axis and the Y-axis directions.

The configuration of the workpiece transfer and positioning device 9 is almost identical to that of a commonly known workpiece transfer and positioning device for a turret punch press; therefore, only a brief description will be presented here. Specifically, the workpiece transfer and positioning device 9 is provided with a carriage base 11 which can be freely transferred in the Y-axis direction and is guided by a Y-axis direction guide rail (omitted from the drawings) by means of a Y-axis motor (also omitted from the drawings). The carriage base 11 extends in the X-axis direction on the workpiece table 7, and a carriage 13 is supported on the carriage base 11 in a freely transferable manner in the X-axis direction by means of an X-axis motor (omitted from the drawings) provided on the carriage base 11. Adjustable workpiece clamps 15 for clamping the free end of the workpiece W are mounted on the carriage 13.

After the workpiece W has been clamped in the workpiece clamps 15, the carriage base 11 is moved and positioned in the Y-axis direction, and the carriage 13 is moved and positioned along the carriage base 11 in the X-axis direction, so that the workpiece W can be suitably transferred and positioned.

As is commonly known, a striker 17 for freely striking a punch 19 is provided on the upper frame arm 3U of the turret punch press 1 in a manner allowing free movement in the vertical direction. A crank mechanism or hydraulic cylinder, for example, causes the vertical movement of the striker 17, in a well known manner.

A disk-shaped upper turret 21 and a disk-shaped lower turret 25 are provided in a freely rotatable manner in the opening 5 in the frame 3 for performing a punching operation on the workpiece W. The upper turret 21 supports a plurality of punches 19, freely mountable and dismountable for changing, and the lower turret 23 supports a plurality of dies 23, each of which can be freely mounted or dismounted for changing and is located opposite to one of the punches 19.

More specifically, at the end section of the opening 5 in the main frame 3, is provided a tie-rod-shaped vertical shaft 27, one end of which is secured to the upper part of the end section of the upper frame arm 3U and the other end of which is secured to the end section of the lower frame arm 3L. Also, a holder frame 31 is integrally mounted on a side wall of a rotary frame 29 having a multiform cross section (square, in this embodiment) and being supported in a freely rotatable manner on the vertical shaft 27.

The holder frame 31 is C-shaped and provided with an upper arm 33U on the upper end of a column part 33C, and with a lower arm 33L on the lower end of the column part 33C. The upper turret 21 is supported in a freely rotatable manner on the end part of the upper arm 33U by an upper shaft 35, and the lower turret 25 is supported in a freely rotatable manner on the end part of the lower arm 33L by a lower shaft 37.

Within the processing region, the upper turret 21 and the lower turret 25 are suitably rotated, and after the desired punch 19 and die 23 have been set in the processing position under the striker 17, the workpiece W is suitably positioned in the X- and Y-axis directions by means of the workpiece transfer and positioning device 9, so that the workpiece W can be punched with the desired punch 19 and die 23 by striking the punch 19 with the striker 17.

A turret support member 39 is provided on the lower frame arm 3L and is positioned under the striker 17, for supporting the lower turret 25 from below during the punching operation. Accordingly, the turret support member 39 prevents the lower turret 25 from being bent downward when the punch 19 is struck by the striker 17 to perform the punching operation.

An upper sprocket 41U is mounted on the upper shaft 35 of the upper turret 21, and a lower sprocket 41L is mounted on the lower shaft 37 of the lower turret 25 for rotating the upper and lower turrets 21, 25. An endless upper chain 45U is fitted around an upper sprocket 43U, mounted on the upper part of a rotary shaft 43 which is supported in a freely rotatable manner on the column part 33C of the holder frame 31 and around the upper sprocket 41U. In addition, a lower chain 45L is fitted around a lower sprocket 43L mounted on the lower part of the rotary shaft 43, and around the lower sprocket 41L. A follower gear 47 for rotating the rotary shaft 43 is mounted on the lower end of the rotary shaft 43, and a drive gear 51 mounted on a servomotor 49 provided on the lower frame arm 3L engages the follower gear 47 in a freely disengageable manner. The drive gear 51 and the follower gear 47 are engaged and disengaged by swinging the rotary frame 29 around the vertical shaft 27. Engagement occurs when the follower gear 47 is arranged in a position corresponding with the drive gear 51, and disengagement occurs when the follower gear 47 is removed from the drive gear 51 by swinging the rotary frame 29.

As can be readily understood from the foregoing explanation, when the drive gear 51 of the servomotor 49 and the follower gear 47 are in the engaged state, the upper and lower turrets 21, 25 are rotated simultaneously in the same direction, suitably driven by the servomotor 49, and the desired punch 19 and die 23, respectively supported on the upper and lower turrets 21, 25, can be indexed and located at the desired position under the striker 17.

In order to utilize a larger number of punches 19 and dies 23, a second C-shaped holder frame 31B is mounted in a freely mountable/dismountable manner on the rotary frame 29. More specifically, the second frame 31B, when mounted on the rotary frame 29, shows a shape which is symmetrical to the opposite first holder frame 31 and is symmetrically positioned to the first holder frame 31 about the vertical shaft 27. Accordingly, the same reference numerals used for the first holder frame 31 are also used for the second holder frame 31B with the suffix B added, so that a more detailed explanation of the second holder frame 31B can be omitted.

A rotating indexing drive device 53 is provided on the lower frame arm 3L of the main frame 3 to switch the positions of the first holder frame 31 and the second holder frame 31B, and also to rotate a pair of upper and lower turrets 21B, 25B which are supported by the second holder frame 31B.

More specifically, a drive motor 55 is mounted on the lower frame arm 3L and is symmetrically positioned with respect to the servomotor 49 around the vertical shaft 27. A clutch device 59 which freely transmits/interrupts the rotation to the rotary frame 29 and to the upper and lower turrets 21B, 25B supported on the second holder frame 31B, is provided on an output shaft 57 of the drive motor 55.

Specifically, a first drive gear 61, which freely engages a follower gear 47B mounted on a rotary shaft 43B supported on the second holder frame 31B, is provided on the upper portion of the output shaft 57 of the drive motor 55, and a first clutch plate 63 is integrally provided on the first drive gear 61. In addition, a second drive gear 67, which engages a swing gear 65 integrally provided on the rotary frame 29, is supported in a freely rotatable manner on the lower part of the output shaft 57, and a second clutch plate 69 is integrally provided on the second drive gear 67. Further, a clutch switching plate 71 is mounted on the output shaft 57 between the first clutch plate 63 and the second clutch plate 69, rotates together with the output shaft 57 but is free to move in the axial direction of the output shaft 57. The switching of the clutch switching plate 71 is performed by either manual or automatic operation of a shift lever (omitted from the drawings).

It results from the foregoing, that when the clutch switching plate 71 is operated so that it is connected to or engaged with the first clutch plate 63, the rotation of the drive motor 55 is transmitted to the upper and lower turrets 21B, 25B supported on the second holder frame 31B. Accordingly, during the performance of a punching operation on the workpiece W, using the punches 19 and the dies 23 provided on the upper and lower turrets 21, 25 supported on the first holder frame 31, the upper and lower turrets 21B, 25B supported on the second holder frame 31B, are suitably rotated, the punches 19 and the dies 23 on the upper and lower turrets 21B, 25B are changed, and the arrangements are made for the next punching operation.

The positions of the first holder frame 31 and the second holder frame 31B are exchanged by rotation with the help of the drive motor 55 after the clutch switching plate 71 on the clutch device 59 has been switched downward, and the clutch switching plate 71 and the second clutch plate 69 have been put in contact or engaged with each other. In this case, the follower gear 47 supported on the lower side of the first holder frame 31 is disengaged from the drive gear 51 of the servomotor 49 and engaged with the first drive gear 61 of the clutch device 59 by swinging the rotating frame 29. At the same time, the follower gear 47B supported on the lower side of the second holder frame 31, is disengaged from the first drive gear 61 of the clutch device 59 and engaged with the drive gear 51 of the servomotor 49.

Accordingly, after the first holder frame 31 and the second holder frame 31B have been exchanged by swinging the rotating frame 29, the workpiece W can be punched by using the punches 19 and the dies 23 provided on the upper and lower turrets 21B, 25B supported on the second holder frame 31B; in addition, it is possible to change the punches 19 and the dies 23 which are on the upper and lower turrets 21, 25 supported on the first holder frame 31.

Accordingly, by means of this embodiment of the present invention, when the upper and lower turrets 21, 25 supported on the one holder frame 31 are positioned in the processing region, and the workpiece W is being punched using the punches 19 and the dies 23 mounted on the upper and lower turrets 21, 25, it is possible to change the punches and dies 19, 23 on the upper and lower turrets 21B, 25B supported on the other holder frame 31B in preparation for the next punching operation. Therefore, the operating efficiency of preparing new punches and dies and performing the various punching operations can be improved, especially with respect to multivariable small volume processings.

In order to positionally index a holder frame such as the holder frames 31, 31B in the processing region, a suitable number of shot pin devices 73 is provided in the frame 3, whereas an engaging hole 75 for engaging with a pin 73P of the shot pin device 73 is provided on each holder frame 31, 31B.

In addition, although a detailed drawing has been omitted, a securing device is provided to maintain the upper and lower turrets 21, 25 in a secured state when the punches 19 and dies 23 mounted on the upper and lower turrets 21, 25 on the holder frames 31, 31B, are positionally indexed under the striker 17. This securing device may be of the same structure as a conventional shot pin device provided on a conventional turret punch press, to position the upper and lower turrets.

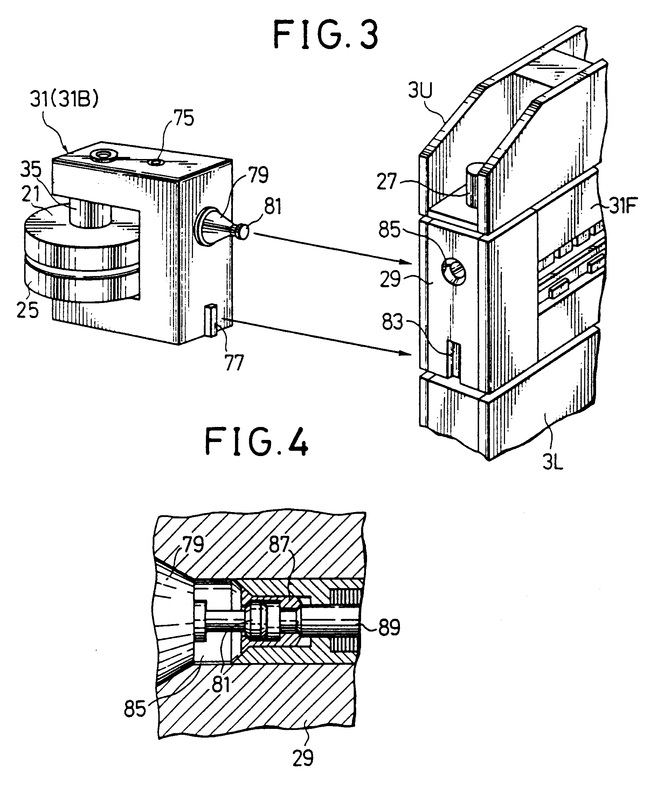

In order to expand the utilization possibilities of the turret punch press 1, the holder frames 31, 31B are installed on the rotary frame 29 in a freely mountable and dismountable manner. Specifically, as shown in FIG. 3, a positioning key 77 and a tapered shaft 79 are provided on the rear side of the holder frames 31, 31B for mounting the same on the rotary frame 29, and a small disk-shaped engaging part 81, for example, is provided on the tip of the tapered shaft 79. A key channel 83, which freely engages/disengages the positioning key 77 and a tapered hole 85 which receives the tapered shaft 79 are formed in side wall of the rotary frame 29.

A collet hook 87 for clamping the engaging part 81 is incorporated in the tapered hole 85 formed in the rotary frame 29, to secure the holder frame 31 to the rotary frame 29. The collet hook 87 is mounted on the end of a pull rod 89 which is moved in a reciprocating manner by a hydraulic cylinder (omitted from the drawing) incorporated in the rotary frame 29.

Accordingly, the holder frame 31 can be secured to the rotary frame 29 by engaging the positioning key 77 in the key channel 83 and engaging the tapered shaft 79 in the tapered hole 85, and then by pulling the pull rod 89 so that the engaging part 81 on the tip of the tapered shaft 79 is clamped by the collet hook 87. Conversely, by pressing the pull rod 89 forward, the engaging part 81 is released from the collet hook 87 so that the holder frame 31 can be removed from the rotary frame 29.

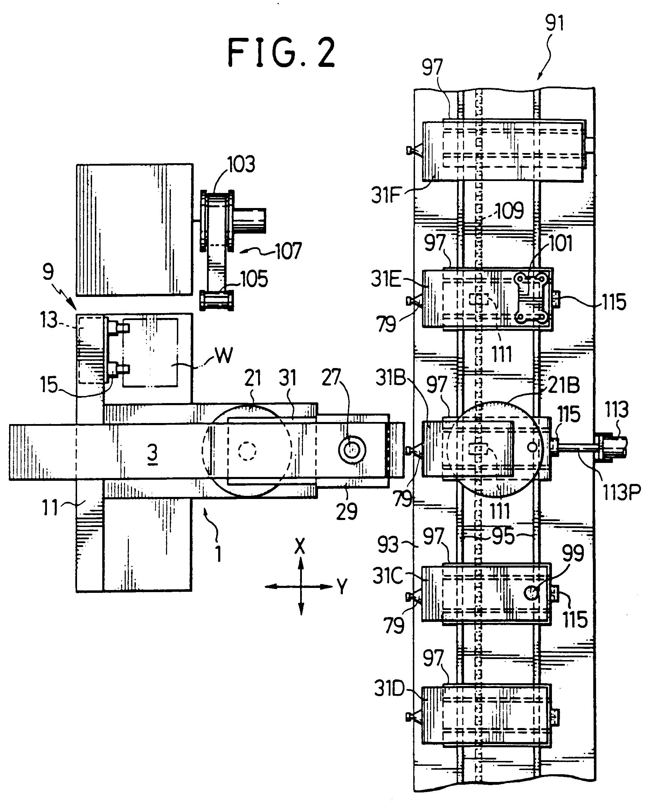

In order to provide various types of holder frames which can be interchanged by mounting/dismounting on the rotary frame 29 of the turret punch press 21, a tool housing device 91 is positioned in front of the turret punch press 21 to house and support various types of holder frames (See FIG. 2).

More specifically, a supporting base 93 extending in the X-axis direction is provided in front of the turret punch press 21. A plurality of sliding members 97 are supported for moving in the X-axis direction on a guide rail 95 provided on the supporting base 93. Various types of freely exchangeable holder frames 31B, 31C, ..... 31F, are supported in a freely mountable/dismountable manner on each of the sliding members 97.

A laser process head 99 from which a laser beam from a laser generating device is introduced to perform a laser process on the workpiece W is supported on the holder frame 31C, whereas a forming mold for carrying out a forming process on the workpiece W is supported on the holder frame 31D. In addition, a progressive die 101 for carrying out a progressive process in a coil strip is mounted on the holder frame 31E, and when the progressive die 101 is used, a coil strip feeder device 107 provided in a position beside the worktable 7 is used for feeding the coil strip into the press 21, the coil strip feeder device generally including an uncoiler 103 or a leveller 105 or the like. Also, a bending tool for bending the workpiece W is mounted on the holder frame 31F.

A freely rotatable ball screw 109 extending parallel to the guide rail 105 is provided to move the sliding members 97 along the guide rail 95. A ball nut 111 mounted on the sliding member 97 is engaged by the ball screw 109. Accordingly, the sliding member 97 can be moved along the guide rail 95 with the help of the screw 109 driven by a motor (omitted from the drawings); it is thus possible to positionally index the sliding member 97 in front of the turret punch press 1.

A push-pull cylinder 113 is mounted on the supporting base 93 for moving the holder frames 31, 31B .... away from the sliding member 97 towards the rotary frame 29, so that the holder frames 31, 31B .... are mounted on the rotary frame 29 and for removing the holder frames from the rotary frame 29. A hook claw 117 is provided on the end of a freely reciprocating piston rod 113P of the push-pull cylinder 113, to releasably engage with a hook part 115 (FIG. 1) mounted on each holder frame 31, 31B ..... The engagement and disengagement of the hook claw 117 with the hook part 115 is effected by rotating the hook claw 117 or the hook part 115 by means of a suitable actuator (omitted from the drawings).

As can be readily understood from the foregoing description, after an empty sliding member 97 has been positionally indexed in front of the turret punch press 1, the hook claw 117 on the end of the piston rod 113P engages the hook part 115 on the holder frame 31, 31B ..... mounted on the rotary frame 29, so that the holder frame can be withdrawn from said rotary frame 29 and installed on the empty sliding member 97 by withdrawing the piston rod 113P.

Afterwards, as soon as another holder frame 31, 31B ..... has been positionally indexed in front of the turret punch press 1 , the other holder frame 31, 31B.... can be mounted on the rotary frame 29 by advancing the other holder frame 31, 31B ..... toward the rotary frame 29 with the piston rod 113P of the push-pull cylinder 113.

Accordingly, by means of this embodiment of the present invention, various types of freely interchangeable holder frames can be used with the rotary frame 29, and various types of processes such as, for example, a laser process, a forming process, a progressive process, a bending process, and the like, can be performed in addition to the punching process.

From the foregoing explanation, it can be seen that when a workpiece is punched using the punches and dies mounted on a first set of upper and lower turrets, punches and dies mounted on another set of upper and lower turrets can be changed in preparation for the next punching operation; therefore the operating efficiency can be improved.

As it is also possible to use interchangeable holder frames which support various types of tools for performing processes other than the punching process, the general field of utilization of the turret punch press is widened and improved.

## Claims

1. A turret punch press (1) comprising :
a C-shaped main frame (3) having an upper frame arm (3U) and a lower frame arm (3L) ;
a workpiece transfer and positioning device (9) for supporting a plate-shaped workpiece (W) in a freely transferable manner in the X-axis and Y-axis directions on the main frame (3) ;
at least a freely rotatable upper turret (21, 21B) supporting a plurality of punches (19) for punching the workpiece (W), and at least a freely rotating lower turret (25, 25B) supporting a plurality of dies (23) to cooperate with the above-mentioned punches (19) ;
a striker (17) with free vertical motion provided on the main frame (3, 3U) for striking the punches (19), and at least
a holder frame (31, 31B) having an upper arm (33U) and a lower arm (33L), the freely rotatable upper turret (21, 21B) and the freely rotatable lower turret (25, 25B) being respectively provided on said upper arm (33U) and said lower arm (33L),
characterized in that said holder frame (31, 31B) is mounted on a tie-rod-shaped vertical shaft (27) in the opening (5) formed between the upper frame arm (3U) and the lower frame arm (3L) of the C-shaped main frame (3), and that,
at the end section of said opening (5), the upper and lower ends of the tie-rod-shaped vertical shaft (27) are secured to the ends of the upper (3U) and lower frame arms (3L) respectively of said C-shaped main frame (3).

2. A turret punch press according to claim 1, characterized in that said holder frame (31, 31B) is rotatably mounted on said vertical shaft (27) with the help of a rotary frame (29) supported on said vertical shaft (27) so as to be freely rotatable.

3. A turret punch press according to claim 1 or 2, characterized in that said holder frame (31, 31B) is interchangeably mounted on said vertical shaft (27) with the help of a rotary frame (29) supported on said vertical shaft (27).

4. A turret punch press according to anyone of claims 1 to 3, characterized in that the rotary frame (29) freely rotatably supported on the tie-rod-shaped vertical shaft (27) has a side wall of multiform cross-section and in that the holder frame (31, 31B) is C-shaped and has its upper and lower arms (33U,33L) linked together by a column part (33C) which is interchangeably mounted on the side wall of said rotary frame (29).

5. A turret punch press according to claim 4, characterized in that a positioning key (77) and a tapered shaft (79) having on its tip an engaging part (81) are provided on the mounting side of a holder frame (31, 31B), that a key channel (83) freely engaging with said positioning key (77) and a tapered hole (85) to be penetrated by said tapered shaft (79) are formed on a mounting side of the rotary frame (29) and that a collet hook (87) for clamping said engaging part (81) is incorporated in said tapered hole (85) to secure the holder frame (31, 31B) to said rotary frame (29).

6. A turret punch press according to anyone of claims 1 to 5, characterized in that several interchangeable holder frames (31, 31B) are mounted on the vertical shaft (27) and are associated with a tool housing device (91) positioned in front of the C-shaped main-frame (3) and provided with a plurality of sliding members (97) supported for moving on a guide rail (95) mounted on a supporting base (93) and extending in the X-axis direction of the workpiece transfer and positioning device (9), that a holder frame (31, 31B, 31C... 31F) is movably mounted on a corresponding sliding member (97) which can be positioned in front of the turret punch press (1), and that a holder frame exchanging device (113) is provided on the supporting base (93) in front of the turret punch press (1).

7. A turret punch press according to anyone of claims 1 to 6, characterized in that the lower frame arm (3L) of the C-shaped main frame (3) has a servomotor (49) provided with a first drive gear (51) and that the holder frame (31,31B) has a follower gear (47,47B) rotatably coupled to the upper and lower turrets (21,25 ; 21B,25B) and engageable with said first drive gear (51).

8. A turret punch press according to anyone of claims 1 to 7, characterized in that the lower frame arm (3L) of the C-shaped main frame (3) has a drive motor (55) symetrically positionned with respect to the servomotor (49) around the vertical shaft (27), that the rotary frame (29) comprises a swing gear (65) and that the output shaft (57) of said drive motor (55) carries a first drive gear (65) engageable with the follower gear (47,47B) of the holder frame (31,31B), a second drive gear (67) engaging said swing gear (65) and a clutch device (59,71) rotatably linked to said output shaft (57) but axially movable between said first and second drive gears (65,67) so as to selectively and rotatably link one of said gears (65,67) with said output shaft (57).

## Patentansprüche

1. Revolverpresse (1), die umfaßt:
ein C-förmiges Hauptgestell (3) mit einem oberen Gestellarm (3U) und einem unteren Gestellarm (3L);
eine Werkstück-Transport-und-Positionier-Vorrichtung (9), die ein plattenförmiges Werkstück (W) auf in Richtung der X-Achse und der Y-Achse frei bewegliche Weise auf dem Hauptgestell (3) trägt;
wenigstens einen frei drehbaren oberen Revolverkopf (21,21B), der eine Vielzahl von Stanzstempeln (19) zum Stanzen des Werkstücks (W) trägt, sowie wenigstens einen unteren Revolverkopf (25,25B), der eine Vielzahl von Stanzwerkzeugen (23) trägt, die mit den obenerwähnten Stanzstempeln (19) zusammenwirken;
einen Mitnehmer (17), der vertikal frei beweglich an dem Hauptgestell (3,3U) angebracht ist und die Stanzstempel (19) mitnimmt, sowie wenigstens:
ein Haltegestell (31,31B), das einen oberen Arm (33U) sowie einen unteren Arm (33L) aufweist, wobei der frei drehbare obere Revolverkopf (21,21B) und der frei drehbare untere Revolverkopf (25,25B) jeweils an dem oberen Arm (33U) und dem unteren Arm (33L) angebracht ist, **dadurch gekennzeichnet**, daß das Haltegestell (31,31B) an einer zugstangenförmigen vertikalen Welle (27) in der Öffnung (5), die zwischen dem oberen Gestellarm (3U) und dem unteren Gestellarm (3L) des C-förmigen Hauptgestells (3) ausgebildet ist, angebracht ist, und daß am Endabschnitt der Öffnung (5) das obere und das untere Ende der zugstangenförmigen vertikalen Welle (27) an den Enden des oberen (3U) bzw. des unteren Gestellarms (3L) des C-förmigen Hauptgestells (3) angebracht sind.

2. Revolverpresse nach Anspruch 1, **dadurch gekennzeichnet**, daß das Haltegestell (31,31B) mittels eines Drehgestells (29), das von der vertikalen Welle (27) frei drehbar getragen wird, an der vertikalen Welle angebracht ist.

3. Revolverpresse nach Anspruch 1 oder 2, **dadurch gekennzeichnet**, daß das Haltegestell (31,31B) mittels eines Drehgestells (29), das von der vertikalen Welle (27) getragen wird, auswechselbar an der vertikalen Welle (27) angebracht ist.

4. Revolverpresse nach einem der Ansprüche 1 bis 3, **dadurch gekennzeichnet**, daß das Drehgestell (29), das frei drehbar von der zugstangenförmigen vertikalen Welle (27) getragen wird, eine Seitenwand mit vielgestaltigem Querschnitt aufweist, und daß das Haltegestell (31,31B) C-förmig ist und sein oberer sowie sein unterer Arm (33U,33L) durch ein Säulenteil (33C) miteinander verbunden sind, das auswechselbar an der Seitenwand des Drehgestells (29) angebracht ist.

5. Revolverpresse nach Anspruch 4, **dadurch gekennzeichnet**, daß ein Positionierkeil (77) und eine konische Welle (79) mit einem Eingriffsteil (81) an ihrer Spitze an der Anbringungsseite eines Haltegestells (31,31B) vorhanden sind, daß eine Keilnut (83), die frei mit dem Positionierkeil (77) in Eingriff ist, sowie eine konische Bohrung (85), in die die konische Welle (79) eindringt, an einer Anbringungsstelle des Drehgestells (29) ausgebildet sind, und daß ein Klemmhaken (87) zum Festklemmen des Eingriffsteils (81) in die konische Bohrung (85) integriert ist, um das Haltegestell (31,31B) an dem Drehgestell (29) zu halten.

6. Revolverpresse nach einem der Ansprüche 1 bis 5, **dadurch gekennzeichnet**, daß mehrere auswechselbare Haltegestelle (31,31B) an der vertikalen Welle (27) angebracht sind und mit einer Werkzeugaufnahmevorrichtung (91) verbunden sind, die sich vor dem C-förmigen Hauptgestell (3) befindet und mit einer Vielzahl von Gleitelementen (97) versehen ist, die auf einer Führungsschiene (95) beweglich gelagert sind, die auf einem Trageunterteil (93) angebracht ist und sich in der X-Achsen-Richtung der Werkstück-Transport-und-Positionier-Vorrichtung (9) erstreckt, daß ein Haltegestell (31,31B,31B...31F) beweglich an einem entsprechenden Gleitelement (97) angebracht ist, das vor der Revolverpresse (1) positioniert werden kann, und daß eine Haltegestell-Auswechselvorrichtung (113) an dem Trageunterteil (93) vor der Revolverpresse (1) angebracht ist.

7. Revolverpresse nach einem der Ansprüche 1 bis 6, **dadurch gekennzeichnet**, daß der untere Gestellarm (3L) des C-förmigen Hauptgestells (3) einen Servomotor (49) aufweist, der mit einem ersten Antriebszahnrad (51) versehen ist, und daß das Haltegestell (31,31B) ein Abtriebszahnrad (47,47B) aufweist, das drehbar mit dem oberen und dem unteren Revolverkopf (21,25;21B,25B) verbunden ist und mit dem ersten Antriebszahnrad (51) in Eingriff gebracht werden kann.

8. Revolverpresse nach einem der Ansprüche 1 bis 7, dadurch gekennzeichnet, daß der untere Gestellarm (3L) des C-förmigen Hauptgestells (3) einen Antriebsmotor (55) aufweist, der in bezug auf den Servomotor (49) um die vertikale Welle (27) herum symmetrisch angeordnet ist, daß das Drehgestell (29) ein Schwenkzahnrad (65) umfaßt, und daß die Ausgangswelle (57) des Antriebsmotors (55) ein erstes Antriebszahnrad (65), das mit dem Abtriebszahnrad (47,47B) des Haltegestells (31,31B) in Eingriff gebracht werden kann, ein zweites Antriebszahnrad (67), das mit dem Schwenkzahnrad (65) in Eingriff ist, und eine Kupplungsvorrichtung (59,71) trägt, die drehbar mit der Ausgangswelle (57) verbunden ist, jedoch axial zwischen dem ersten und dem zweiten Antriebszahnrad (65,67) bewegt werden kann, so daß sie wahlweise und drehbar eines der Zahnräder (65,67) mit der Ausgangswelle (57) verbindet.

## Revendications

1. Poinçonneuse à tourelle revolver (1) comportant :
un bâti principal en forme de C (3) ayant un bras de bâti supérieur (3U) et un bras de bâti inférieur (3L);
un dispositif de transfert et de positionnement de pièce (9) destiné à supporter une pièce en forme de plaque (W) d'une manière librement transportable dans les directions d'axe X et d'axe Y sur le bâti principal (3);
au moins une tourelle supérieure librement rotative (21, 21B) supportant plusieurs poinçons (19) destinés à poinçonner la pièce (W), et au moins une tourelle inférieure librement rotative (25, 25B) supportant plusieurs matrices (23) destinées à coopérer avec les poinçons mentionnés ci-dessus (19);
un dispositif de frappe (17) avec un mouvement vertical libre prévu sur le bâti principal (3, 3U) afin de frapper les poinçons (19), et au moins
un bâti de support (31, 31B) ayant un bras supérieur (33U) et un bras inférieur (33L), la tourelle supérieure librement rotative (21, 21B) et la tourelle inférieure librement rotative (25, 25B) étant prévues de manière respective sur ledit bras supérieur (33U) et ledit bras inférieur (33L),
caractérisée en ce que ledit bâti de support (31, 31B) est monté sur un arbre vertical en forme de tirant (27) dans l'ouverture (5) formée entre le bras de bâti supérieur (3U) et le bras de bâti inférieur (3L) du bâti principal en forme de C (3), et en ce que
au niveau de la section d'extrémité de ladite ouverture (5), les extrémités supérieure et inférieure de l'arbre vertical en forme de tirant (27) sont fixées sur les extrémités des bras de bâti supérieur (3U) et inférieur (3L) respectivement dudit bâti principal en forme de C (3).

2. Poinçonneuse à tourelle revolver selon la revendication 1, caractérisée en ce que ledit bâti de support (31, 31B) est monté de façon rotative sur ledit arbre vertical (27) à l'aide d'un bâti rotatif (29) supporté sur ledit arbre vertical (27) de façon à être librement rotatif.

3. Poinçonneuse à tourelle revolver selon la revendication 1 ou 2, caractérisée en ce que ledit bâti de support (31, 31B) est monté de façon interchangeable sur ledit arbre vertical (27) à l'aide d'un bâti rotatif (29) supporté sur ledit arbre vertical (27).

4. Poinçonneuse à tourelle revolver selon l'une quelconque des revendications 1 à 3, caractérisée en ce que le bâti rotatif (29) supporté de façon librement rotative sur l'arbre vertical en forme de tirant (27) possède une paroi latérale de section multiforme et en ce que le bâti de support (31, 31B) est en forme de C et a ses bras supérieur et inférieur (33U, 33L) liés ensemble par une partie de colonne (33C) qui est montée de façon interchangeable sur la paroi latérale dudit bâti rotatif (29).

5. Poinçonneuse à tourelle revolver selon la revendication 4, caractérisée en ce qu'une clavette de positionnement (77) et un arbre conique (79) ayant à son extrémité une partie d'engagement (81) sont prévus sur le côté de montage d'un bâti de support (31, 31B), en ce qu'un canal de clavette (83) engageant librement ladite clavette de positionnement (77) et un trou conique (85) devant être pénétré par ledit arbre conique (79) sont formés sur un côté de montage du bâti rotatif (29) et en ce qu'un crochet à collerette (87) destiné à serrer ladite partie d'engagement (81) est incorporé dans ledit trou conique (85) afin de fixer le bâti de support (31, 31B) sur ledit bâti rotatif (29).

6. Poinçonneuse à tourelle revolver selon l'une quelconque des revendications 1 à 5, caractérisée en ce que plusieurs batis de support interchangeables (31, 31B) sont montés sur l'arbre vertical (27) et sont associés à un dispositif de logement d'outil (91) positionné en face du bâti principal en forme de C (3) et pourvu de plusieurs éléments coulissants (97) supportés pour un déplacement sur un rail de guidage (95) monté sur une base de support (93) et s'étendant dans la direction d'axe X du dispositif de positionnement et de transfert de pièce (9), en ce qu'un bâti de support (31, 31B, 31C ... 31F) est monté de façon mobile sur un élément coulissant correspondant (97) qui peut être positionné en face de la poinçonneuse à tourelle revolver (1), et en ce qu'un dispositif d'échange de bâti de support (113) est prévu sur la base de support (93) en face de la poinçonneuse à tourelle revolver (1).

7. Poinçonneuse à tourelle revolver selon l'une quelconque des revendications 1 à 6, caractérisée en ce que le bras de bâti inférieur (3L) du bâti principal en forme de C (3) a un servomoteur (49) pourvu d'un premier pignon d'entraînement (51) et en ce que le bâti de support (31, 31B) a un pignon suiveur (47, 47B) couplé de façon rotative aux tourelles supérieure et inférieure (21, 25; 21B, 25B) et pouvant être engagé avec ledit premier pignon d'entraînement (51).

8. Poinçonneuse à tourelle revolver selon l'une quelconque des revendications 1 à 7, caractérisée en ce que le bras de bâti inférieur (3L) du bâti principal en forme de C (3) a un moteur d'entraînement (55) positionné de manière symétrique par rapport au servomoteur (49) autour de l'arbre vertical (27), en ce que le bâti rotatif (29) comporte un pignon oscillant (65) et en ce que l'arbre de sortie (57) dudit moteur d'entraînement (55) porte un premier pignon d'entraînement (65) pouvant être engagé avec le pignon suiveur (47, 47B) du bâti de support (31, 31B), un deuxième pignon d'entraînement (67) engageant ledit pignon oscillant (65) et un dispositif d'embrayage (59, 71) lié de façon rotative au dit arbre de sortie (57) mais axialement mobile entre lesdits premier et deuxième pignons d'entraînement (65, 67) de façon à lier de manière sélective et rotative un desdits pignons (65, 67) au dit arbre de sortie (57).
